# EUROPÄISCHE PATENTSCHRIFT

(11) **EP 4 088 994 B1**
(45) Veröffentlichungstag und Bekanntmachung des Hinweises auf die Patenterteilung: **13.12.2023**
(21) Anmeldenummer: 21173050.2
(22) Anmeldetag: 10.05.2021
(51) Int. Cl.: B62D 55/28

(54) **GLEITSCHUTZVORRICHTUNG**
ANTISKID DEVICE
DISPOSITIF ANTIDÉRAPANT

(43) Veröffentlichungstag der Anmeldung: 16.11.2022
(73) Patentinhaber: pewag Schneeketten GmbH & Co KG, 9371 Brückl (AT)
(72) Erfinder: Schemitsch, Hubert, 9020 Klagenfurt (AT); Grossauer, Georg, 8530 Deutschlandsberg (AT); Spang, Stefan, 73441 Bopfingen (DE)
(74) Vertreter: Patentanwaltskanzlei Matschnig & Forsthuber OG

(56) Entgegenhaltungen:
- EP-A1- 2 588 362
- EP-A1- 3 393 894

## Beschreibung

Die Erfindung betrifft eine Gleitschutzvorrichtung, die zur Anbringung an einer Fahrwerkkomponente eines Antriebsmittels, insbesondere einem Raupenband eines Raupenfahrzeugs, eingerichtet ist.

Gleitschutzvorrichtungen der hier betrachteten Art sind dafür vorgesehen, auf ein Fahrwerk eines Fahrzeugs, genauer gesagt auf die mit dem Untergrund in Kontakt kommende Komponente des Fahrwerks wie insbesondere ein Raupenband, montiert zu werden, und sollen die Traktion des Fahrwerks auf dem Untergrund verbessern. Die Fahrwerkkomponente ist im Rahmen der Erfindung in der Regel ein Raupenband, kann aber im Allgemeinen auch eine andere Komponente eines Antriebsmittels sein, die mit dem Untergrund in Kontakt kommt, wie z.B. ein Rad bzw. Radreifen.

Die hier betrachtete Gleitschutzvorrichtung ist bevorzugt, jedoch ohne darauf eingeschränkt zu sein, zur Verwendung bei einem Raupenantrieb eines Raupenfahrzeugs vorgesehen. Unter Raupenfahrzeug wird hier allgemein ein mit einem Raupenantrieb ausgestattetes Fahrzeug verstanden. Bei einem Raupenantrieb werden für den Zweck der Fortbewegung eine Anzahl von Raupenbändern, zumeist zwei, als Antriebskomponente eingesetzt. Jedes Raupenband kann beispielsweise als kontinuierliches Band aus elastischem Material (z. B. Gummi) ausgebildet sein, das ringartig zu einem Endlosband geschlossen ist, oder aus einer Vielzahl von Raupengliedern, die miteinander ringartig zu einer (endlos) geschlossenen Kette verbunden sind - im letzteren Fall wird das Raupenband auch als Raupenkette oder Gleiskette bezeichnet. Das Raupenband bzw. die Raupenglieder können aus verschiedenen Materialien hergestellt sein, insbesondere aus Metall oder Kunststoff, z.B. einem Elastomer.

Unter Traktion wird hier die Kraft verstanden, die von einer Fahrwerkkomponente auf eine Oberfläche (in der Regel die Oberfläche eines Untergrunds, der die Fahrwerkkomponente aufliegt) übertragen wird, wobei diese Kraft in tangentialer Richtung zu dieser Oberfläche wirkt. Üblicher Weise wird die Traktion zum Antrieb eines Fahrzeugs, dem die Fahrwerkkomponente zugehört, eingesetzt.

Die Gleitschutzvorrichtung dient wie bereits erwähnt dazu, die Traktion eines Raupenbandes bzw. Rades zu erhöhen, wobei besonders die von dem Antriebsmittel (Raupenband) aufzunehmenden Seitenkräfte von besonderer Relevanz sind. Dies liegt im Falle einer Raupe daran, dass Raupen typischer Weise aufgrund der Geometrie ihrer Stollen, die auf der Außenfläche der Raupenglieder aufgesetzt sind, bevorzugt in Fahrtrichtung Traktion übertragen. Das kann jedoch zu dem Problem führen, dass beim Durchfahren von schrägen Fahrbahnen auf Eis, Schnee, aufgeweichten Hängen, usw. ein Abrutschen des Fahrzeuges - besonders zur Seite hin - möglich ist. Beispielsweise ist bei der transversalen Kreuzung von Lifttrassen im alpinen Bereich (dort ist auch noch häufig Eis anzutreffen, das zusätzlich zum Risiko des Rutschens beiträgt!) ein Abrutschen besonders begünstigt und zugleich besonders unerwünscht. Gleitschutzvorrichtungen herkömmlicher Art bieten in dieser Hinsicht häufig unzureichende Traktionsleistung. Zudem weisen viele herkömmliche Gleitschutzvorrichtungen einen beträchtlichen Platzverbrauch der Befestigungsmittel am Raupenband auf, besonders am seitlichen Rand der Raupe, was nicht nur an sich störend ist, sondern auch zu Berührungen oder sogar Beschädigungen an dem Chassis des Fahrzeugs führen kann.

Daher soll die Erfindung einerseits ein derartiges Abrutschen weitgehend verringern oder gänzlich verhindern, anderseits eine platzsparende Befestigung der Vorrichtung an der jeweiligen Fahrwerkkomponente ermöglichen.

In EP 2588 362 A1 ist eine Kettenplatte für eine Kette eines Kettenraupenantriebs offenbart, welche quer zur Fahrtrichtung verlaufende Stege aufweist, wobei im flachen Bereich zwischen zwei Stegen ein Fenster vorgesehen ist. EP 3393 894 A1 beschreibt eine weitere Gleitschutzvorrichtung zur Anbringung auf einem Raupenband, gemäß dem Oberbegriff des Anspruchs 1.

Die genannte Aufgabe wird durch eine Gleitschutzvorrichtung gemäß dem Anspruch 1 gelöst. Eine Gleitschutzvorrichtung der Erfindung umfasst einen Grundkörper sowie gegebenenfalls ein oder mehrere darauf befindliche Traktionselemente, wobei der Grundkörper entlang einer ersten Richtung - die im auf einer Fahrwerkkomponente montierten Zustand der Laufrichtung der Fahrwerkkomponente entspricht - mehrere aufeinanderfolgende Abschnitte aufweist, nämlich zumindest zwei Bodenabschnitte (die dafür vorgesehen sind, im montierten Zustand auf einem Teil einer Lauffläche des Raupenbands aufzuliegen) sowie zumindest einen Rippenabschnitt, der zwischen jeweils zwei Bodenabschnitten angeordnet und mit diesen fest verbunden ist, und der eine über die Bodenabschnitte erhaben aufgewölbte Form aufweist und sich auf diesen abstützt,
wobei der Rippenabschnitt bzw. zumindest einer der Rippenabschnitte quer zur ersten Richtung durch zumindest ein Fenster in zwei oder mehr Rippenteile gegliedert ist, die jeweils eine von den Bodenabschnitten abgewandte Außenfläche aufweisen,
wobei in der Gleitschutzvorrichtung zumindest eine Befestigungsstelle zur Verankerung auf einem Raupenband vorgesehen ist. Sofern die Gleitschutzvorrichtung ein Traktionselement aufweist, ist dieses jeweils auf einer der Außenflächen von dieser abstehend, d.h. nach außen wegragend, vorgesehen.

Durch diese erfindungsgemäße Lösung wird die Traktion des Fahrwerks, insbesondere Raupenbands, verbessert, besonders hinsichtlich der aufzunehmenden Seitenkräfte. Dadurch kann ein Abrutschen, insbesondere in seitlicher Richtung, unterbunden oder zumindest deutlich verringert werden. Außerdem werden weitere Parameter des Traktionsverhaltens, wie Bremswirkung, Beschleunigungswirkung, Spurhalten bei Kurvenfahrten u.ä., verbessert.

Die Gleitschutzvorrichtung der Erfindung ist nicht auf Raupenantriebe eingeschränkt; sie kann auch auf anderen Antriebsmitteln bzw. Fahrwerkkomponenten, z.B. Rädern mit Luft- oder Vollgummireifen, zum Einsatz kommen. Das Fahrzeug kann beispielsweise ein ziviles Nutzfahrzeug (z.B. ein Traktor mit Rad- oder Raupenantrieb, eine Pistenraupe) oder eine fahrbare Maschine sein, wie z.B. eine Forstmaschine, kann aber auch ein militärisches Fahrzeug sein, wie z.B. ein Panzer.

In einer vorteilhaften Weiterbildung der Erfindung kann der Grundkörper dahingehend ausgebildet sein, dass die Bodenabschnitte und Rippenabschnitte miteinander einstückig sind. Hierbei sind in der Regel je zwei Bodenabschnitte durch zumindest zwei Rippenteile verbunden.

In einer anderen zweckmäßigen Weiterbildung können die Rippenteile voneinander getrennte Komponenten sein, die durch geeignete Verbindungsmittel zusammengefügt sind. Die Rippenteile können in beiderseits anschließende Bodenteile übergehen, wobei jeweils die zu einem Rippenabschnitt auf je einer Seite gehörenden Bodenteile miteinander durch eine quer zur ersten Richtung verlaufenden Querstrebe verbunden sind, wodurch die Bodenteile zusammen mit den Querstreben die Bodenabschnitte bilden.

Die Traktionselemente können in verschiedenen Arten ausgeführt sein. Beispielsweise kann auf einer, auf einigen oder auf jeder der Außenflächen ein oder mehrere von der Außenfläche abstehende Traktionselemente vorgesehen sein. Auch können einige oder alle der Traktionselemente auf den Außenflächen der Rippenteile aufgeschweißte dorn-, bügel- oder stegartige Komponenten sein.

Des Weiteren ist es möglich, dass alternativ oder in Kombination zum Vorhergehenden zumindest eines der Traktionselemente als vorspringende Ausformung des Rippenteils - z. B. ausgestanzt - ausgebildet ist.

Für eine einfache und doch wirkungsvolle Implementierung des Grundkörpers kann dieser aus einem oder mehreren geformten Blechteilen gebildet sein.

Um eine zuverlässige Auflage auf der Auflageflache der betreffenden Fahrwerkkomponente zu erreichen, kann es günstig sein, wenn die Bodenabschnitte flache Teilabschnitte aufweisen, die dazu vorgesehen sind, im auf ein Raupenband montierten Zustand einer Oberfläche des Raupenbands anzuliegen.

Die Rippenteile können des Weiteren beiderseits der Außenflächen Flankenabschnitte aufweisen, die in einem Neigungswinkel zu den Außenflächen verlaufen und dazu vorgesehen sind, im auf ein Raupenband montierten Zustand der Gleitschutzvorrichtung an Rippenseitenflächen des Raupenbandes anzuliegen, wobei in den Flankenabschnitten vorzugsweise fensterartige Ausnehmungen vorgesehen sind.

Die Befestigungsstellen, die zur Anbringung der Vorrichtung an dem z. B. Raupenband dienen, können vorteilhafterweise als Öffnungen in den Bodenabschnitten ausgebildet sind, durch die Befestigungsmittel zur Verankerung der Gleitschutzvorrichtung an dem Raupenband lösbar anbringbar sind.

Zweckmäßiger Weise können in jedem Bodenabschnitt zumindest zwei Befestigungsstellen vorgesehen sein, in die jeweils Befestigungsmittel zur Verankerung der Gleitschutzvorrichtung auf einem Raupenband einsetzbar sind.

In einer anderen zweckmäßigen Weiterbildung ist es günstig, wenn die Befestigungsmittel senkrecht zur Bodenfläche in Richtung Raupenband befestigt sind, z. B. angeschweißt. Dies hat den Vorteil, dass die Befestigungsmittel nicht eigens angebracht werden müssen.

Zur Steigerung der Stabilität gegen Verformungen kann es günstig sein, wenn die Bodenteile quer zu ersten Richtung gesehen ein L-Profil aufweisen, wobei jeweils ein Schenkel des L-Profils dafür vorgesehen ist, im montierten Zustand auf einem Teil einer Lauffläche des Raupenbands aufzuliegen.

Die Erfindung betrifft auch ein Gleitschutzsystem mit einer Vorrichtung wie vorangehend diskutiert sowie Befestigungsmittel, welche in jeweils entsprechende Befestigungsstellen einsetzbar sind und zum Verankern der Gleitschutzvorrichtung auf einem Raupenband mit einem Spiel in Abstandsrichtung zum Raupenband ausgelegt sind.

Zur Lösung der oben gestellten Aufgabe ist auch ein Raupenband eines Raupenfahrzeugs mit einer oder mehreren darauf befestigten erfindungsgemäßen Gleitschutzvorrichtung(en) geeignet und vorteilhaft.

Die Erfindung samt weiteren Ausgestaltungen und Vorzügen wird im Folgenden anhand von beispielhaften Ausführungsformen weiter erläutert, die in den beigefügten Zeichnungen dargestellt sind. Die Zeichnungen zeigen in schematischen Darstellungen:
- Fig. 1: ein Traktionssystem gemäß einer ersten Ausführungsform in einer perspektivischen Ansicht, mit Traktionselementen in Form zapfenartiger Vorsprünge ("Stacheln");
- Fig. 2: weitere Ansichten des Traktionssystems der Fig. 1, nämlich eine Ansicht von oben (Fig. 2a), von der Seite (Fig. 2b) und eine Vorderansicht (Fig. 2c);
- Fig. 3: eine Ausführungsvariante des Traktionssystems ohne Traktionselemente, in einer Ansicht von oben (Fig. 3a), von der Seite (Fig. 3b) und Vorderansicht (Fig. 3c);
- Fig. 4: eine andere Ausführungsvariante des Traktionssystems, worin die Traktionselemente als kurze Leisten ("Stummel") ausgebildet sind, in einer Teilansicht von oben (Fig. 4a) und von der Seite (Fig. 4b);
- Fig. 5: ein Traktionssystem gemäß einer weiteren Ausführungsform in einer perspektivischen Ansicht, mit einem mehrteiligen Grundkörper;
- Fig. 6: weitere Ansichten des Traktionssystems der Fig. 5, nämlich eine Ansicht von oben (Fig. 6a), von der Seite (Fig. 6b) und eine Vorderansicht (Fig. 6c);
- Fig. 7: ein Seitenteil des Grundkörpers des Traktionssystems der Fig. 5;
- Fig. 8: eine Querstrebe des Grundkörpers des Traktionssystems der Fig. 5;
- Fig. 9: einen Abschnitt eines Raupenbandes, auf dem mehrere Traktionssysteme des Typs der Fig. 1 und 2 montiert sind; und
- Fig. 10: ein Raupenfahrzeug mit zwei Raupenbändern.

Es versteht sich, dass die hier beschriebenen Ausführungsformen lediglich der Illustration dienen und nicht als für die Erfindung einschränkend aufzufassen sind; vielmehr fallen unter den Schutzbereich der Erfindung sämtliche Ausgestaltungen, die der Fachmann anhand der Beschreibung finden kann, wobei der Schutzbereich durch die Ansprüche festgelegt ist. Im Rahmen dieser Offenbarung bezeichnen insbesondere Begriffe wie "beispielhaft", "vorteilhaft", oder "bevorzugt" Merkmale oder Abmessungen, die für die Erfindung oder Ausführungsformen derselben besonders günstig (aber nicht wesentlich) sind, und diese Merkmale und Abmessungen können vom Fachmann frei nach Belieben abgewandelt werden.

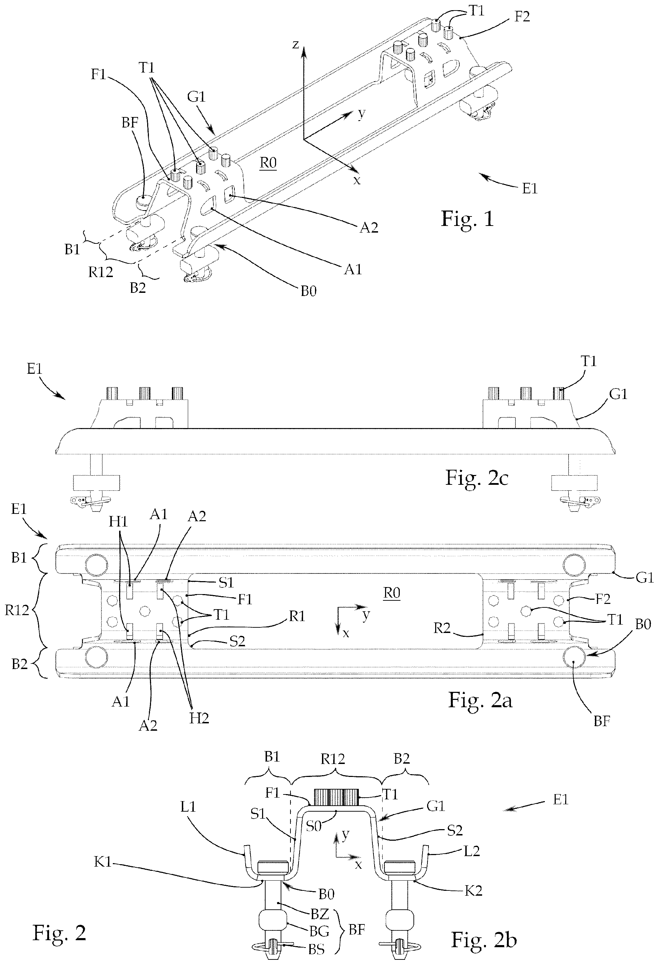

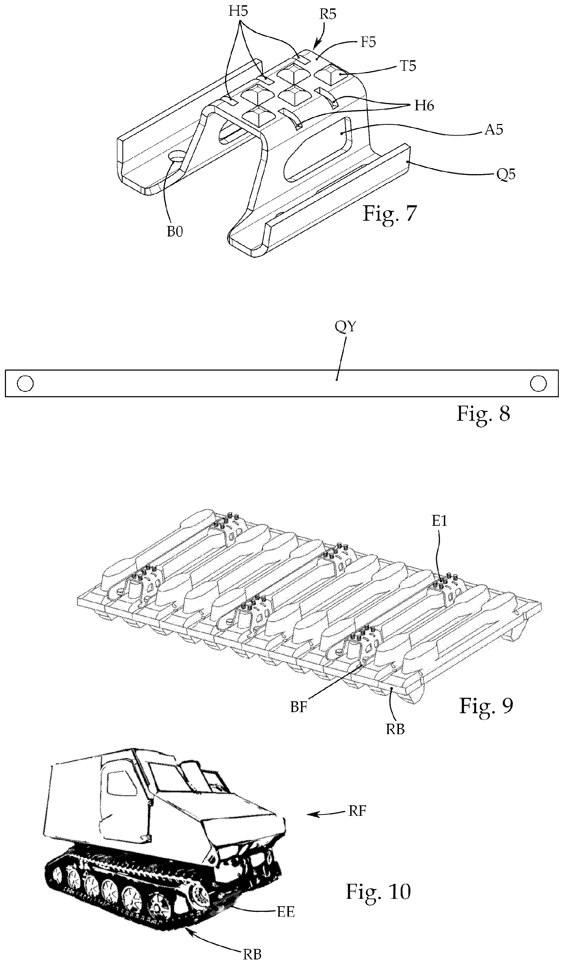

In den folgenden Figuren werden für gleiche oder vergleichbare Elemente zum Zwecke der einfacheren Erläuterung und Darstellung gleiche Bezugszeichen verwendet. Zudem sollen die Bezugszeichen, die in den Ansprüchen verwendet werden, lediglich die Lesbarkeit der Ansprüche und das Verständnis der Erfindung erleichtern und haben keinesfalls einen den Schutzumfang der Erfindung einschränkenden Charakter. Wo immer in dieser Offenbarung und insbesondere in den Ansprüchen Begriffe der räumlichen Lage wie "auf", "oberhalb", "empor", "seitlich", "vertikal" und diese entsprechende Bezeichnungen verwendet werden, beziehen sich diese auf eine Orientierung der Gleitschutzvorrichtung, bei der diese auf einer horizontalen Unterlage liegt und die Bodenabschnitte auf der Unterlage aufliegen, während sich der (bzw. jeder) Rippenabschnitt von diesen nach oben abhebt - siehe insbesondere Fig. 1. Dies entspricht auch der Orientierung einer Gleitschutzvorrichtung, wenn sie sich in montierter Position auf einem oberen Teil eines Antriebsmittels bzw. einer Fahrwerkkomponente befindet, wie z.B. in Fig. 9 dargestellt. Dabei versteht sich auch, dass die Orientierung in einer tatsächlichen Lage, insbesondere im Laufe der Bewegung bei angetriebenem Fahrzeug, sich ändern kann, ohne dass dies eine Abweichung vom Schutzumfang begründen kann.

In Fig. 1 ist ein Traktionssystem E1 gemäß einer ersten Ausführungsform einer erfindungsgemäßen Gleitschutzvorrichtung dargestellt, das für den Einsatz auf einem Raupenglied eines Raupenantriebs vorgesehen ist. In Fig. 2a-2c ist das Traktionssystem E1 in weiteren Ansichten entlang den Grundrichtungen (bezeichnet als x, y, z) gezeigt, nämlich in Fig. 2a in Draufsicht (Blickrichtung gegen die Vertikale z), in Fig. 2b in Seitenansicht (in Richtung y) und in Fig. 2c in einer Vorderansicht (Ansicht gegen die Richtung x, die der Laufrichtung des Raupenbands entspricht).

Das Traktionssystem E1 beinhaltet einen Grundkörper in Form eines Grundträgers G1 aus einem gebogenen Blech-Formteil, vorzugsweise aus gehärtetem Stahlblech. Auf dem Grundträger G1, genauer gesagt auf einer oder mehreren der oberen Außenflächen F1, F2, ist zumindest ein Traktionselement T1 angebracht.

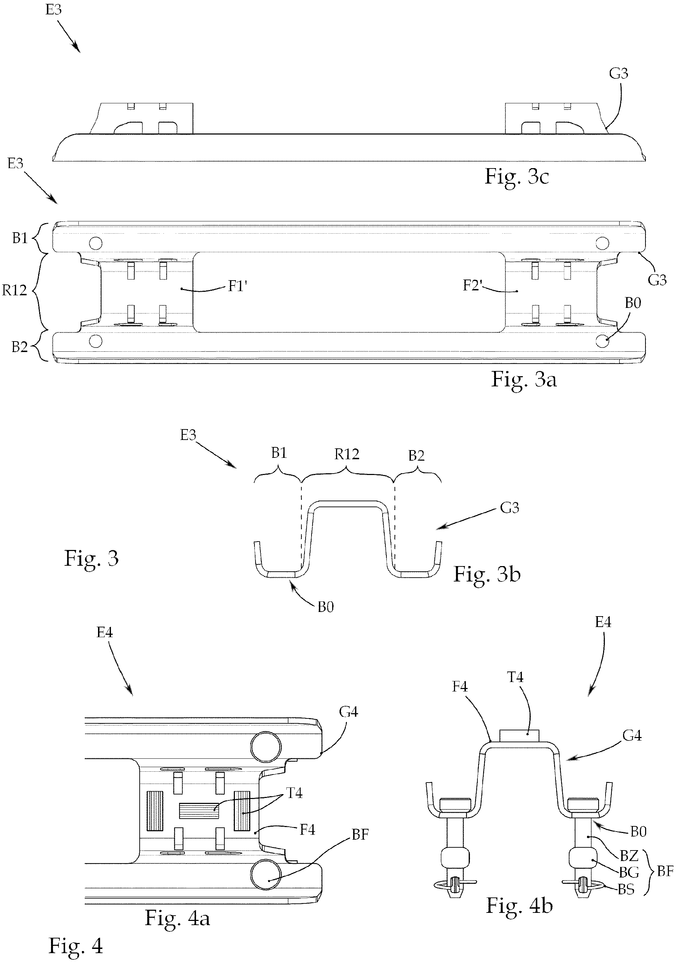

Der Grundträger G1 hat, wie in Fig. 1 und besonders in Fig. 2b ersichtlich ist, eine im Allgemeinen wellenartige Grundform entlang der Richtung x, die der "ersten Richtung" der Ansprüche bzw. der Laufrichtung des Raupenbandes entspricht. Diese gewellte Grundform dient dazu, dass das Traktionssystem auf eine Rippe eines Raupenbandes (vgl. Fig. 4) gelegt und in dieser Lage auf dem Raupenband montiert werden kann, wie weiter unten eingehend beschrieben wird. Der Grundträger G1 kann hinsichtlich der gewellten Grundform in mehrere Abschnitte gegliedert werden, nämlich in der Ausführungsform der Fig. 1 und 2 drei Abschnitte, nämlich einen ersten Bodenabschnitt B1, einen Rippenabschnitt R12 und einen zweiten Bodenabschnitt B2.

Die beiden Bodenabschnitte B1, B2 bilden vorzugsweise die in Laufrichtung x gesehen außen liegenden Teile des Traktionssystems E1. Sie haben eine längliche Grundform, die sich quer zur Laufrichtung (d.h. in Richtung y) erstreckt, beispielsweise mit einem L-Profil. Die Bodenabschnitte B1, B2 weisen vorteilhafterweise jeweils einen flachen Auflagebereich K1, K2 auf, der einen Teilabschnitt des Bodenabschnitts darstellt, in dem der betreffende Bodenabschnitt einem korrespondierenden Gebiet der Lauffläche des Raupenbandes aufliegt; zusätzlich kann - insbesondere im Falle eines L-Profils - zumindest ein von dem flachen Bereich nach außen hin emporstehender Bereich als Verstärkungsbereich L1, L2, z.B. in Form einer Leiste, vorgesehen sein, um die Stabilität des Grundträgers gegenüber Verbiegung zu verbessern. Jeder der Auflagebereiche K1, K2 kann gegebenenfalls in mehrere Teilbereiche gegliedert sein (siehe weiter unten).

Der Rippenabschnitt R12 ist zwischen den zwei Bodenabschnitten B1, B2 angeordnet, mit diesen fest verbunden und stützt sich auf diesen ab. Der Rippenabschnitt R12 weist eine über die Bodenabschnitte erhaben aufgewölbte Form auf und ist, wie in Fig. 1 und insbesondere in Fig. 2a erkennbar ist, durch zumindest ein Fenster R0 in zwei oder mehr Rippenteile gegliedert. Hierbei ist bevorzugt auf jedem der Rippenteile R1, R2 jeweils eine Außenfläche F1, F2 vorgesehen, die ein oder mehrere Traktionselemente T1 trägt. Die Außenflächen F1, F2 stellen, wie besonders gut in Fig. 2 ersichtlich ist, ein oberen Teil S0 des Rippenabschnitts (bzw. der Rippenteile) dar, an den sich beiderseits Seitenflanken S1, S2 anschließen, über die jeweils die Verbindung zu den Bodenabschnitten hergestellt ist. In der gezeigten Ausführungsform ist jede der Außenflächen eine geschlossene, insgesamt im Wesentlichen rechteckige Fläche; in anderen Ausführungsformen könnte eine, einige oder jede der Außenflächen auch eine andere Form haben und/oder aus mehreren Teilflächen zusammengesetzt sein, die durch z.B. Rillen oder Vertiefungen voneinander abgesetzt sind.

Die Seitenflanken S1, S2 verlaufen nicht unbedingt genau vertikal, vielmehr ist es vorteilhaft, wenn sie gegenüber der Vertikalen z um einen geringen Winkel geneigt sind, damit sie sich den gleichfalls geneigten Rippenflächen der Raupe besser anschmiegen können. Im gezeigten Ausführungsbeispiel liegen die Seitenflanken beispielsweise in einem Winkel von 95° zur Ebene der Außenflächen; im Allgemeinen liegen zweckmäßige Winkel in einem Bereich von 90° bis 135°, vorzugsweise 90° bis 100° oder 90° bis 95°.

In anderen (nicht gezeigten) Ausführungsformen kann die Anzahl der Abschnitte auch mehr als drei sein, beispielsweise fünf im Falle eines Traktionssystems, das zur Anbringung auf zwei aufeinanderfolgende Rippen eines Raupenbandes eingerichtet ist, oder gegebenenfalls noch mehr. Allerdings könnte ein erfindungsgemäßes Traktionssystem, das zur Anbringung auf zwei aufeinanderfolgende Rippen eines Raupenbandes eingerichtet ist, auch lediglich drei Abschnitte aufweisen, nämlich einen Rippenabschnitt, der über zwei Rippen liegt (wobei er in der Mitte nicht auf das Niveau der Bodenabschnitte abfallen muss), zwischen zwei Bodenabschnitten.

Die Seitenflanken S1, S2 können zudem Freistellungen, z.B. in Form von einer oder mehreren fensterartigen Ausnehmungen A1, A2 enthalten. Diese Freistellungen verringern einerseits das Gewicht der Vorrichtung, ohne die Stabilität merklich zu beeinträchtigen, andererseits ermöglichen sie, dass Verunreinigungen wie Schnee oder Schlamm, die in den Bereich zwischen Seitenflanken und Raupenbandrippe eindringen, leichter wieder nach außen abgegeben werden können, wodurch eine Selbstreinigungswirkung erreicht wird. Außerdem können weitere Freistellungen H1, H2 in den Außenflächen F1, F2 oder an deren Rändern zu den Seitenflanken hin vorgesehen sein, z. B. in Form von Schlitzen oder Kerben. Die Ausnehmungen A1, A2 und/oder Freistellungen H1, H2 sind beispielsweise paarweise, einander gegenüberliegend vorgesehen, können aber auch entlang der y-Richtung gegeneinander versetzt sein.

In diesem Ausführungsbeispiel sind auf jeder Außenfläche F1, F2 je fünf Traktionselemente T1 vorgesehen, hier in Form von "Stacheln", d. s. zapfenartige Vorsprünge, die z.B. aus aufgeschweißten, vertikal emporstehenden Strangstücken aus einem vorteilhafterweise gehärtetem Profilstahl gebildet sind. Die Traktionselemente T1 jeweils einer Außenfläche F1 bzw. F2 sind beispielsweise in einer kreuzartigen Anordnung zueinander positioniert. Die Anzahl, relative Anordnung und Ausgestaltung der Traktionselemente T1 ist variabel und kann in Abhängigkeit von dem Untergrund, für den das jeweilige Traktionssystem bestimmt ist, und die sich daraus ergebenden Traktionserfordernisse gewählt werden.

Bezugnehmend auf Fig. 9 wird ein Traktionssystem E1 auf einem Raupenband RB, und zwar in der Regel mit einem eine Rippe tragenden Abschnitt des Raupenbandes bzw. einem Raupenglied der Raupe, angebracht und mittels Befestigungsmitteln BF fixiert, welche vorteilhafterweise werkzeuglos montierbar und demontierbar sind. In den gezeigten Ausführungsbeispielen werden - wie auch in Fig. 2b und 4b erkennbar ist - als Befestigungsmittel Bolzen BZ mit Kopf verwendet, die von oben nach unten durch den Grundträger, nämlich jeweils durch eine als Befestigungsstelle B0 vorgesehene Öffnung in dem Bodenteil B1, B2, und die Raupe (in die zu diesem Zweck entsprechende Bohrungen vorgesehen bzw. hergestellt werden müssen) gesteckt werden und mithilfe von Gegenstücken BG an der Unterseite der Raupe gesichert werden; die Gegenstücke BG können zusätzlich mit Sicherungssplinten BS gesichert werden. Alternativ können Befestigungsmittel bereits vormontiert sein, beispielsweise in Form von an je einer Befestigungsstelle senkrecht zur Bodenfläche in Richtung Raupenband befestigte (z.B. angeschweißte) Bolzen, Gewindezapfen oder dergleichen.

In anderen, nicht gezeigten Ausführungsvarianten können anstelle der Bolzen auch andere geeignete, aus dem Stand der Technik bekannte Verbindungsmöglichkeiten eingesetzt werden, wie z.B. Verschraubungen oder Klammern. Beispielsweise kann im Falle einer Gleitschutzvorrichtung, die für die Befestigung auf einem Traktorreifen oder anderer Fahrwerkkomponente bestimmt ist, die Befestigung mithilfe von Schrauben erfolgen, die in den Reifen eingeschraubt werden (gegebenenfalls in hierfür vorgebohrte Löcher). Die Befestigungsmittel BF sind dem jeweiligen Traktionssystem zugeordnet, stellen jedoch keine zwingenden Bestandteile der erfindungsgemäßen Gleitschutzvorrichtung dar.

In Fig. 10 ist beispielhaft ein Fahrzeug RF mit einem Raupenantrieb gezeigt. Dieser beinhaltet zwei geschlossene Raupenbänder RB, wobei auf jedem Raupenband RB mehrere Traktionssysteme EE nacheinander entlang der Laufrichtung in einem Abstand zueinander montiert sind; die Traktionssysteme EE sind beispielsweise Traktionssysteme E1 des ersten Ausführungsbeispiels, können aber auch andere Traktionssysteme nach der Erfindung sein, z.B. die Traktionssysteme E3, E4 oder E5, oder es können die Traktionssysteme verschiedener Typen "gemischt" werden.

Die Befestigungsmittel BF ermöglichen vorteilhafterweise ein Spiel der Anbringung des Grundträgers (Grundkörpers) auf der Raupe. Das wird beispielsweise in der gezeigten Ausführungsform dadurch erreicht, dass der Abstand zwischen dem Kopf des Bolzens BZ und dem darin montierten Gegenstück BG größer ist als die Dicke, die Grundträger und Raupenband zusammen an der Stelle der Befestigung haben, beispielsweise um einige Millimeter, z.B. 3 mm. Dies ergibt ein Spiel vertikal zur Fahrtrichtung bzw. Oberfläche des Raupenbandes, und dank dieses Spiels hat das Traktionssystem im Betrieb die Eigenschaft, dass sich der Grundteil von der Raupe durch Zentrifugalkräfte (oder infolge der Verformung des Raupenglieds) abheben kann. Dies hat einen positiven Einfluss auf die Selbstreinigung des Systems, da etwaige Schnee-, Eis-, Schotterablagerungen, die zwischen Grundkörper und Raupe eingedrungen sind, sich lösen und dann hinausgeworfen (infolge zentrifugaler Bewegung) werden können. Somit ermöglicht das Spiel der Befestigungsbolzen einen Freiraum in Richtung der Zentrifugalkräfte beim Abheben des Traktionssystems von der Fahrbahn (nämlich wenn das Raupenglied vom Boden abhebt und durch die Umlenkrollen nach oben dirigiert wird). Der Freiraum bzw. das Spiel wird zweckmäßiger Weise so groß gewählt, dass das Ablösen und Ableiten der Ablagerungen erfolgen kann. Dieses Spiel ist auch im Hinblick auf die Verformung während der Fahrt vorteilhaft; denn die Raupe von Raupenfahrzeugen ist in der Regel sehr beweglich und die Teile der Raupe verstellen und/oder verformen sich, sodass sich die Raupe dem Untergrund anschmiegt (z.B. beim Überfahren von Steinen, Bodenwellen oder anderen Untergrundstrukturen). Diese Verformung und/oder Verwindung der Raupe kann das erfindungsgemäße Traktionssystem vorteilhafterweise aufnehmen, was sowohl zur Sicherung der Traktion als auch zur Langlebigkeit der Vorrichtung beiträgt. In entsprechender Weise kann bei anderen Arten von Befestigungsmitteln ein Spiel bzw. Freiraum erzielt werden; z.B. im Falle der oben erwähnten Schrauben dadurch, dass diese soweit eingeschraubt werden, dass der Abstand des Schraubenkopfes von der Oberfläche des Reifens größer ist als die Dicke des Grundträgers an der Befestigungsstelle.

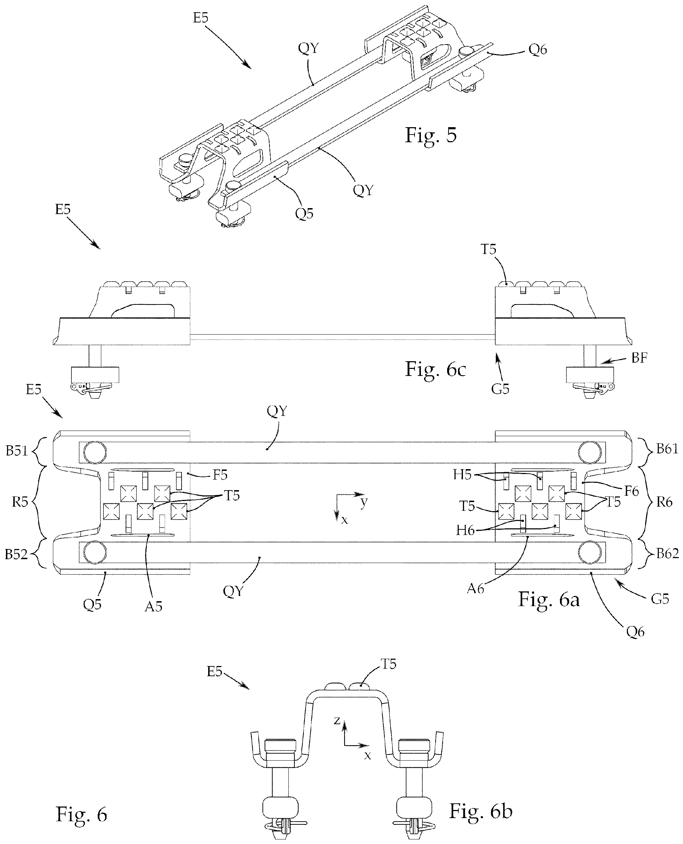

Wieder bezugnehmend auf Fig. 1 und 2 ist der aus zwei Bodenabschnitten B1, B2 und Rippenteilen R1, R2 bestehende Grundkörper bzw. Grundträger G1 einstückig; er ist beispielsweise aus einer Blechplatine hergestellt, die z. B. aus einem Rohblech lasergeschnittenen und anschließend gebogen wird. Alternativ kann der Grundträger auch durch andere Fertigungstechnologien gefertigt werden, wie z.B. Fräsen, Spritzgießen, Schmieden, od. dgl. Jedoch kann der Grundkörper auch mehrteilig sein, wie der Grundkörper G5 der Ausführungsform der Fig. 5 und 6, wobei dann hinsichtlich der Herstellung der einzelnen Komponenten Gleichartiges wie für den obigen Grundträger G1 gilt, und die Komponente werden in einem nachfolgenden Schritt zu einem Grundkörper zusammengefügt (z.B. durch Schweißen) oder im Zuge der Montage auf einem Raupenband oder Rad zusammengebaut.

Fig. 3 zeigt eine Ausführungsvariante E3 des Traktionssystems, das keine Traktionselemente enthält, und zwar in Fig. 3a in Draufsicht, in Fig. 3b in Seitenansicht und in Fig. 3c in einer Vorderansicht (analog zu Fig. 2a-2c). Der Grundkörper G3 weist keine Traktionselemente auf, somit sind die Außenflächen F1' und F2' "nackt". Im Übrigen Jedoch ist der Grundkörper G3 zu dem Grundkörper G1 des ersten Ausführungsbeispiel bauartgleich. Die Befestigung des Traktionssystems E3 erfolgt beispielsweise ebenso mithilfe von als Bolzen ausgeführten Befestigungsmitteln (in Fig. 3 nicht gezeigt) wie weiter oben anhand des Traktionssystems E1 beschrieben ist. Wie bereits erwähnt sind die Befestigungsmittel BF (Fig. 2) dem jeweiligen Traktionssystem zugeordnet, stellen jedoch keine zwingenden Bestandteile der erfindungsgemäßen Gleitschutzvorrichtung in sämtlichen hier gezeigten Ausführungsformen dar. Im Übrigen entspricht das Traktionssystem E3 dem weiter oben beschriebenen Traktionssystem E1.

Fig. 4 zeigt eine Ausführungsvariante E4 des Traktionssystems, in der eine Außenfläche F4 mit jeweils drei Traktionselementen T4 in Form von "Stummeln" ausgebildet ist, und zwar in Fig. 4a eine Teilansicht des Grundträgers G4 des Traktionssystems E4 in Draufsicht und in Fig. 4b in Seitenansicht. Diese Traktionselemente T4 ("Stummel") sind liegende Komponenten, z.B. kurze Leisten aus z.B. gehärtetem Stahl, die jeweils mit einer Seitenfläche auf der betreffenden Außenfläche angeschweißt oder auf andere Weise dauerhaft befestigt sind. Die Leisten können in verschiedenen horizontalen Richtungen (d.h. in Richtungen parallel zur x-y-Ebene) verlaufen, wie in Fig. 4 erkennbar, oder auch zueinander parallel (nicht gezeigt). Im Übrigen entspricht das Traktionssystem E4 dem weiter oben beschriebenen Traktionssystem E1.

Zur dauerhaften Anbringung der Traktionselemente T1, T4 auf den Außenflächen F1, F2, F4 können Befestigungsverfahren bekannter Art, wie z.B. Schweißen, Schrauben, Kleben oder dgl. eingesetzt werden. Als Traktionselemente können stehende "Stachel", liegende "Stummel" oder auch andere Gestaltungen der auf die Außenfläche fixierten Komponenten verwendet werden, wie z.B. U- oder V-förmige Bügel usw. Die Anzahl, relative Anordnung und Ausgestaltung der Traktionselemente T1, T4 kann nach Gesichtspunkten der Fahrbahnabdeckung erfolgen, und die Traktionselemente können auf der Außenfläche des Grundträgers symmetrisch oder asymmetrisch in Bezug auf die Längsrichtung des Raupenbandes und/oder quer dazu angeordnet sein. Beispielsweise ist die Verwendung von Traktionselement in Form von "Stacheln" oder "Stummeln" aus Profilstahl günstig, um eine Vergrößerung der Oberfläche zur Verbesserung der Traktionsübertragung zu erzielen; mit Rundstahl ("glatte" Elemente) dagegen kann eine Lärmentwicklung verringert werden.

Wie erwähnt bestehen sowohl der Grundkörper als auch die Traktionselemente aus gehärtetem Stahl, was der Erhöhung der mechanischen Festigkeit und Verschleißbeständigkeit dient. Dabei ist es in der Regel günstig, wenn der Härtungsprozess des Stahles erst nach dem Anbringen der Traktionselemente durch Schweißen stattfindet; dadurch ergibt sich eine stabilere Befestigung (Schweißverbindung). Um die Verschleiß- und mechanische Festigkeit zusätzlich positiv zu beeinflussen, können unterschiedliche Stahlmaterialien für den Grundkörper und die Traktionselemente verwendet werden.

In den Figuren 5 bis 8 ist eine weitere Ausführungsform der Erfindung gezeigt, nämlich ein Traktionssystem E5, worin der Grundkörper mehrteilig ausgebildet ist.

Der Grundkörper G5 ist in dieser Ausführungsform durch zwei Seitenteile Q5, Q6 gebildet; diese werden durch zwei Querstreben QY, die entlang der Querrichtung y verlaufen, miteinander verbunden. Fig. 7 zeigt eines der Seitenteile, das rechte Seitenteil Q5, in unverbundenem Zustand in einer perspektivischen Ansicht; Fig. 8 zeigt eine Querstrebe QY in unverbundenem Zustand in Draufsicht. Jedes Seitenteil Q5, Q6, umfasst jeweils ein Rippenteil R5, R6, das in beiderseits anschließende Bodenteile B51, B52, B61, B62 übergeht. Die Rippenteile R5, R6 sind voneinander getrennt, aber stellen zusammengenommen den Rippenabschnitt des Grundkörpers G5 dar. Jeweils die einem Rippenabschnitt auf je einer Seite zugeordneten Bodenteile, nämlich Bodenteile B51 und B61 sowie Bodenteile B52 und B62 sind miteinander durch eine Querstrebe QY verbunden, wodurch diese Bodenteile zusammen mit den Querstreben Bodenabschnitte im Sinne der Erfindung bilden.

Die Verbindung der Seitenteile bzw. Bodenteile mit den Querstrebe QY kann durch eigene Befestigungsmittel erfolgen, oder durch dieselben Befestigungsmittel, die auch zur Befestigung des Traktionssystems auf dem Raupenband dienen, wie dies in Fig. 5 und 6 angedeutet ist.

Jeder Rippenteil R5, R6 weist eine Außenfläche F5, F6 auf, die auch in diesem Ausführungsbeispiel einen oberen Teil der Rippenteile bilden, an den sich beiderseits Seitenflanken anschließen, über die jeweils die Verbindung zu den Bodenabschnitten hergestellt ist. In jeder Seitenflanke ist beispielsweise eine fensterartige Ausnehmung A5, A6 ausgebildet.

In diesem Ausführungsbeispiel trägt jede Außenfläche F5, F6 je fünf Traktionselemente T5 in einer zickzackartigen Anordnung. Die Traktionselemente T5 sind als Erhebungen in dem Profil der Außenflächen F5, F6 ausgebildet, und sind durch Stanzung der Außenflächen von der Unterseite her hergestellt. Die Anzahl, relative Anordnung und Ausgestaltung der Traktionselemente T1 ist auch in dieser Ausgestaltung variabel und kann in Abhängigkeit von dem Untergrund, für das das jeweilige Traktionssystem bestimmt ist, und den zugehörenden Traktionserfordernissen gewählt werden. Auch in diesem Fall können weitere Freistellungen H5, H6 in den Außenflächen F5, F6 oder an deren Rändern zu den Seitenflanken hin vorgesehen sein, z.B. in Form von Schlitzen oder Kerben. Die Freistellungen H5, H6 sind hier entlang der y-Richtung gegeneinander versetzt, können aber auch paarweise, einander gegenüberliegend vorgesehen sein. In der in Fig. 5-7 gezeigten Anordnung ist jeweils eine Freistellung H5, H6 gegenüber einem der Traktionselemente T5 hinsichtlich der Querrichtung y angeordnet.

Im Übrigen gilt für die Ausführungsform der Fig. 5-8 das zu dem ersten Ausführungsbeispiel anhand der Figuren 1 bis 3 oben Gesagte. Zudem liegt es auf der Hand, dass die Traktionselemente des Traktionssystems E1 oder E4 auch in dem Traktionssystem E5 verwendet werden können und umgekehrt, und generell sämtliche Merkmale, die nicht unmittelbar mit der einstückigen oder mehrteiligen Verwirklichung des Grundkörpers zusammenhängen, zwischen den Ausführungsbeispielen gegeneinander austauschbar sind.

Ein weiterer bedeutender Vorteil der erfindungsgemäßen Gleitschutzvorrichtung ist, dass die Befestigungsmittel nicht seitlich - d.h. in Bezug auf die y-Richtung - über die Ränder des Trägerkörpers und der Raupe hinausragen. Die erfindungsgemäße Lösung, spezifisch die Befestigung mittels durch den Grundkörper geführten Befestigungsmittel, ist besonders bei freiraumbeschränkten Fahrzeugen von Vorteil, da ein seitliches Umfassen der Raupe nicht notwendig ist, um ein Festhalten der Gleitschutzvorrichtung am Raupenband zu erreichen. Besonders an der Innenseite der Raupe (d. i. der Rand der Raupe, der dem Fahrzeug zugewandt ist) ist hier der Abstand zum Chassis des Fahrzeuges oft beschränkt, wodurch eine Befestigung mit seitlich umgreifenden Komponenten eine Kollision mit dem Chassis verursachen würde. Dies ist im Gegensatz zu vielen herkömmlichen Gleitschutzvorrichtungen, die die Raupe an der Seite umfassen, was häufig zu Problemen hinsichtlich der Bewegungsfreiheit der Raupe und des Platzbedarfs an der Seite nach Innen zum Chassis des Fahrzeugs hin führt, oftmals auch zu Beschädigungen. Die Erfindung ermöglicht dagegen eine Befestigung der Gleitschutzvorrichtung ohne zusätzlichen Platzbedarf über die Erstreckung des Raupenbands quer zur Laufrichtung (d.h. die Erstreckung in y-Richtung) hinaus.

Des Weiteren ist es möglich, dass mehrere Traktionssysteme zueinander seitlich versetzt angebracht werden, also quer zur Fahrtrichtung (Laufrichtung), was die Abdeckung der Fahrbahnbreite optimiert. Dazu sind lediglich die Verbindungsbohrungen an der Raupe selbst entsprechend versetzt anzubringen.

Ein weiterer Vorteil der vorliegenden Lösung ist, dass die Montage/Demontage werkzeuglos und beliebig oft erfolgen kann, die Befestigungsbolzen können verschleißfest und lange haltbar ausgeführt werden, z.B. einsatzgehärteter Stahl. Dies ist vor allem im Vergleich mit einschraubbaren Spikelösungen von Vorteil, da diese nur bedingt wiederholt montierbar sind.

Je nach Traktionsanforderung kann die Anzahl der Systeme pro Raupe beliebig variiert werden. Zweckmäßiger Weise sollte die Anordnung mehrerer Traktionssysteme auf einem Raupenband (oder allgemein einer Fahrwerkkomponente) so erfolgen, dass sichergestellt ist, dass jeweils eine ausreichende Anzahl von Traktionssystemen (z.B. zwei, drei, oder mehr) gleichzeitig in Kontakt mit dem Untergrund stehen, während sich das Band bzw. Rad weiterdreht. Beispielsweise können acht Traktionssysteme am Raupenumfang angebracht werden, sodass zumindest drei von diesen in jeder Position des Raupenbandes an der Kontaktfläche zum Untergrund zum Einsatz kommen.

## Patentansprüche

1. Gleitschutzvorrichtung (E1, E3, E4, E5) zur Anbringung an einer Fahrwerkkomponente eines Antriebsmittels, insbesondere einem Raupenband eines Raupenfahrzeugs, umfassend einen Grundkörper (G1, G3, G4, G5),
wobei der Grundkörper (G1, G3, G4, G5) entlang einer ersten Richtung, die im auf einer Fahrwerkkomponente montierten Zustand der Gleitschutzvorrichtung der Laufrichtung der Fahrwerkkomponente entspricht, mehrere aufeinanderfolgende Abschnitte aufweist, nämlich zumindest zwei Bodenabschnitte (B1, B2; B51, B52, B61, B62) sowie zumindest einen Rippenabschnitt (R12, R5, R6), der zwischen jeweils zwei Bodenabschnitten angeordnet und mit diesen fest verbunden ist,
wobei in der Gleitschutzvorrichtung zumindest eine Befestigungsstelle (B0) zur Verankerung auf einem Raupenband vorgesehen ist,
**dadurch gekennzeichnet, dass**
der zumindest eine Rippenabschnitt (R12, R5, R6) eine über die Bodenabschnitte erhaben aufgewölbte Form aufweist und sich auf diesen abstützt,
wobei der Rippenabschnitt bzw. zumindest einer der Rippenabschnitte quer zur ersten Richtung durch zumindest ein Fenster (R0) in zwei oder mehr Rippenteile (R1, R2; R5, R6) gegliedert ist, die jeweils eine von den Bodenabschnitten abgewandte Außenfläche (F1, F2; F5, F6) aufweisen.

2. Vorrichtung nach Anspruch 1, **dadurch gekennzeichnet, dass** die Bodenabschnitte (B1, B2) und Rippenabschnitte (R1, R2) miteinander einstückig sind, wobei je zwei Bodenabschnitte durch zumindest zwei Rippenteile verbunden sind.

3. Vorrichtung nach Anspruch 1, **dadurch gekennzeichnet, dass** die Rippenteile (R5, R6) voneinander getrennte Komponenten sind, die in beiderseits anschließende Bodenteile (B51, B52, B61, B62) übergehen, wobei jeweils die zu einem Rippenabschnitt auf je einer Seite gehörenden Bodenteile miteinander durch eine quer zur ersten Richtung verlaufenden Querstrebe (QY) verbunden sind, wodurch die Bodenteile zusammen mit den Querstreben die Bodenabschnitte bilden.

4. Vorrichtung nach einem der vorhergehenden Ansprüche, **dadurch gekennzeichnet, dass** auf zumindest einer der Außenflächen (F1, F2, F4, F5, F6), vorzugsweise auf jeder Außenfläche, ein oder mehrere von der Außenfläche abstehende Traktionselemente (T1, T4, T5) vorgesehen sind.

5. Vorrichtung nach Anspruch 4, **dadurch gekennzeichnet, dass** einige oder alle der Traktionselemente auf den Außenflächen der Rippenteile aufgeschweißte dorn-, bügel- oder stegartige Komponenten sind.

6. Vorrichtung nach Anspruch 4 oder 5, **dadurch gekennzeichnet, dass** zumindest eines der Traktionselemente (T5) als vorspringende Ausformung des Rippenteils ausgebildet ist.

7. Vorrichtung nach einem der vorhergehenden Ansprüche, **dadurch gekennzeichnet, dass** der Grundkörper (E1, E3, E4) aus einem oder mehreren geformten Blechteilen gebildet ist.

8. Vorrichtung nach einem der vorhergehenden Ansprüche, **dadurch gekennzeichnet, dass** die Bodenabschnitte flache Teilabschnitte (K1, K2) aufweisen, die dazu vorgesehen sind, im montierten Zustand einer Oberfläche des Raupenbands anzuliegen.

9. Vorrichtung nach Anspruch 8, **dadurch gekennzeichnet, dass** die Bodenteile quer zu ersten Richtung gesehen ein L-Profil aufweisen, wobei jeweils ein Schenkel des L-Profils einen der besagten flachen Teilabschnitte (K1, K2) beinhaltet.

10. Vorrichtung nach einem der vorhergehenden Ansprüche, **dadurch gekennzeichnet, dass** die Rippenteile beiderseits der Außenflächen Flankenabschnitte (S1, S2) aufweisen, die in einem Neigungswinkel zu den Außenflächen verlaufen und dazu vorgesehen sind, im auf ein Raupenband montierten Zustand der Gleitschutzvorrichtung an Rippenseitenflächen des Raupenbandes anzuliegen, wobei in den Flankenabschnitten vorzugsweise fensterartige Ausnehmungen (A1, A2, A5, A6) vorgesehen sind.

11. Vorrichtung nach einem der vorhergehenden Ansprüche, **dadurch gekennzeichnet, dass** die Befestigungsstellen (B0) als Öffnungen in den Bodenabschnitten ausgebildet sind, durch die Befestigungsmittel (BF) zur Verankerung der Gleitschutzvorrichtung an der Fahrwerkkomponente lösbar anbringbar sind.

12. Vorrichtung nach einem der vorhergehenden Ansprüche, **dadurch gekennzeichnet, dass** in jedem Bodenabschnitt zumindest zwei Befestigungsstellen (B0) vorgesehen sind, in die jeweils Befestigungsmittel (BF) zur Verankerung der Gleitschutzvorrichtung auf der Fahrwerkkomponente einsetzbar sind.

13. Vorrichtung nach einem der Ansprüche 1 bis 10, **dadurch gekennzeichnet, dass** die zumindest eine Befestigungsstelle ein senkrecht zur Bodenfläche in Richtung Raupenband befestigtes, z.B. angeschweißtes, Befestigungsmittel beinhaltet.

14. Gleitschutzsystem umfassend eine Gleitschutzvorrichtung nach einem der vorhergehenden Ansprüche sowie Befestigungsmittel (BF), welche in jeweils entsprechende Befestigungsstellen (B0) einsetzbar sind und zum Verankern der Gleitschutzvorrichtung auf einem Raupenband mit einem Spiel in Abstandsrichtung zum Raupenband ausgelegt sind.

15. Raupenband (RB) eines Raupenfahrzeugs mit zumindest einer darauf befestigten Gleitschutzvorrichtung (EE) nach einem der vorhergehenden Ansprüche.

## Claims

1. Anti-skid device (E1, E3, E4, E5) for being mounted to an undercarriage component of a drive means, in particular a continuous track of a tracked vehicle, comprising a base body (G1, G3, G4, G5),
the base body (G1, G3, G4, G5) having several successive sections along a first direction, which corresponds to the rolling direction of the undercarriage component when the anti-skid device is mounted to an undercarriage component, namely at least two bottom sections (B1, B2; B51, B52, B61, B62) and at least one rib section (R12, R5, R6) that is arranged between and fixedly connected to two respective bottom sections,
wherein at least one fastening point (B0) is provided in the anti-skid device for anchoring on a continuous track,
**characterized in that**
the at least one rib section (R12, R5, R6) has a shape elevated above the bottom sections and being supported on them,
wherein the rib section or at least one of the rib sections is divided transversely to the first direction by at least one window (R0) into two or more rib parts (R1, R2; R5, R6), each having an outer surface (F1, F2; F5, F6) facing away from the bottom sections.

2. Device according to claim 1, **characterized in that** the bottom sections (B1, B2) and rib sections (R1, R2) are integral with each other, each two bottom sections being connected by at least two rib parts.

3. Device according to claim 1, **characterized in that** the rib parts (R5, R6) are mutually separate components that merge into bottom parts (B51, B52, B61, B62) at both sides, wherein bottom parts that belong to a rib section on each side are connected to each other by a transverse strut (QY) extending transversely to the first direction, so that the bottom sections are formed by the bottom parts together with the transverse struts.

4. Device according to any one of the preceding claims, **characterized in that** one or more traction elements (T1, T4, T5) projecting from the outer surface are provided on at least one of the outer surfaces (F1, F2, F4, F5, F6), preferably on each outer surface.

5. Device according to claim 4, **characterized in that** some or all of the traction elements are components shaped as mandrels, brackets or webs, welded onto the outer surfaces of the rib parts.

6. Device according to claim 4 or 5, **characterized in that** at least one of the traction elements (T5) is formed as a protruding development of the rib part.

7. Device according to any one of the preceding claims, **characterized in that** the base body (E1, E3, E4) is formed from one or more shaped sheet metal parts.

8. Device according to any one of the preceding claims, **characterized in that** the bottom sections comprise flat sub-portions (K1, K2) intended to abut, when mounted, a surface of the track.

9. Device according to claim 8, **characterized in that** the bottom portions, viewed transversely to the first direction, have an L-section, each leg of the L-section including one of said flat sub-portions (K1, K2).

10. Device according to any one of the preceding claims, **characterized in that** the rib parts have, on either sides of the outer surfaces, flank sections (S1, S2) extending at an angle of inclination to the outer surfaces and are intended, when the anti-skid device is mounted on a track, to bear against rib side surfaces of the track, wherein preferably window-like recesses (A1, A2, A5, A6) are provided in the flank sections.

11. Device according to any one of the preceding claims, **characterized in that** the fastening points (B0) are realized as openings in the bottom sections, through which fastening means (BF) can be detachably attached for anchoring the anti-skid device to the chassis component.

12. Device according to any one of the preceding claims, **characterized in that** in each bottom section at least two fastening points (B0) are provided, into which respective fastening means (BF) can be inserted for anchoring the anti-skid device on the chassis component.

13. Device according to any one of claims 1 to 10, **characterized in that** the at least one fastening point includes a fastening means fixed, for example welded, to the bottom surface perpendicular to the direction of the crawler belt.

14. Anti-skid system comprising an anti-skid device according to any one of the preceding claims and fastening means (BF) configured to being inserted into respective corresponding fastening points (B0) and to anchor the anti-skid device on a crawler belt allowing a clearance in the direction of spacing from the crawler belt.

15. Continuous track (RB) of a tracked vehicle on which at least one anti-skid device (EE) according to any one of the preceding claims is fixed.

## Revendications

1. Dispositif antidérapant (E1, E3, E4, E5) destiné à être monté sur un composant de train d'atterrissage d'un moyen d'entraînement, en particulier une bande de chenilles d'un véhicule à chenilles, comprenant un corps de base (G1, G3, G4, G5),
le corps de base (G1, G3, G4, G5) présentant plusieurs sections successives le long d'une première direction qui, lorsque le dispositif antidérapant est monté sur un composant de train d'atterrissage, correspond à la direction de déplacement du composant de train d'atterrissage, à savoir au moins deux sections de fond (B1, B2 ; B51, B52, B61, B62) ainsi qu'au moins une section de nervure (R12, R5, R6) qui est disposée entre deux sections de fond respectives et est reliée fixement à celles-ci,
au moins un point de fixation (B0) étant prévu dans le dispositif antidérapant pour l'ancrage sur une bande de chenille,
**caractérisé en ce que**
ledit au moins une section de nervure (R12, R5, R6) présente une forme bombée en relief au-dessus des sections de fond et s'appuie sur celles-ci,
la section de nervure ou au moins l'une des sections de nervure étant divisée transversalement à la première direction par au moins une fenêtre (R0) en deux ou plusieurs parties de nervure (R1, R2 ; R5, R6), qui présentent chacune une surface extérieure (F1, F2 ; F5, F6) opposée aux sections de fond.

2. Dispositif selon la revendication 1, **caractérisé en ce que** les sections de fond (B1, B2) et les sections de nervures (R1, R2) sont d'une seule pièce entre elles, deux sections de fond étant reliées par au moins deux parties de nervures.

3. Dispositif selon la revendication 1, **caractérisé en ce que** les parties de nervure (R5, R6) sont des composants séparés l'un de l'autre qui se prolongent par des parties de fond (B51, B52, B61, B62) se raccordant de part et d'autre, les parties de fond appartenant chacune à une section de nervure sur un côté respectif étant reliées l'une à l'autre par une entretoise transversale (QY) s'étendant transversalement à la première direction, les parties de fond avec les entretoises transversales formant ainsi les sections de fond.

4. Dispositif selon l'une quelconque des revendications précédentes, **caractérisé en ce que** sur au moins l'une des surfaces extérieures (F1, F2, F4, F5, F6), de préférence sur chaque surface extérieure, sont prévus un ou plusieurs éléments de traction (T1, T4, T5) en saillie par rapport à la surface extérieure.

5. Dispositif selon la revendication 4, **caractérisé en ce qu'**une partie ou la totalité des éléments de traction sont des composants de type mandrin, étrier ou entretoise soudés sur les surfaces extérieures des parties de nervure.

6. Dispositif selon la revendication 4 ou 5, **caractérisé en ce qu'**au moins l'un des éléments de traction (T5) est formé comme une partie en saillie de la pièce nervurée.

7. Dispositif selon l'une quelconque des revendications précédentes, **caractérisé en ce que** le corps de base (E1, E3, E4) est formé d'une ou plusieurs pièces de tôle façonnée.

8. Dispositif selon l'une quelconque des revendications précédentes, **caractérisé en ce que** les portions de fond comportent des portions plates (K1, K2) destinées à venir en appui sur une surface de la chenille à l'état monté.

9. Dispositif selon la revendication 8, **caractérisé en ce que** les parties de fond présentent, vu transversalement à la première direction, un profil en L, chaque branche du profil en L comportant une desdites parties plates (K1, K2).

10. Dispositif selon l'une quelconque des revendications précédentes, **caractérisé en ce que** les parties de nervure présentent, de part et d'autre des surfaces extérieures, des sections de flanc (S1, S2) qui s'étendent selon un angle d'inclinaison par rapport aux surfaces extérieures et qui sont prévues pour s'appuyer, lorsque le dispositif antidérapant est monté sur une bande de chenille, contre des surfaces latérales de nervure de la bande de chenille, de préférence des évidements (A1, A2, A5, A6) en forme de fenêtre étant prévus dans les sections de flanc.

11. Dispositif selon l'une quelconque des revendications précédentes, **caractérisé en ce que** les points de fixation (B0) sont réalisés sous forme d'ouvertures dans les sections de plancher, à travers lesquelles des moyens de fixation (BF) pour l'ancrage du dispositif antidérapant sur le composant de train d'atterrissage peuvent être montés de manière amovible.

12. Dispositif selon l'une quelconque des revendications précédentes, **caractérisé en ce que** dans chaque section de plancher sont prévus au moins deux points de fixation (B0) dans chacun desquels peuvent être insérés des moyens de fixation (BF) pour l'ancrage du dispositif antidérapant sur le composant de train d'atterrissage.

13. Dispositif selon l'une quelconque des revendications 1 à 10, **caractérisé en ce que** ledit au moins un point de fixation comprend un moyen de fixation fixé, par exemple soudé, perpendiculairement à la surface du sol en direction de la bande de chenille.

14. Système antidérapant comprenant un dispositif antidérapant selon l'une quelconque des revendications précédentes ainsi que des moyens de fixation (BF) adaptés à être insérés dans des points de fixation (B0) correspondants respectifs et conçus pour ancrer le dispositif antidérapant sur une bande de chenille avec un jeu dans le sens de la distance par rapport à la bande de chenille.

15. Bande chenillée (RB) d'un véhicule à chenilles sur laquelle est fixé au moins un dispositif antidérapant (EE) selon l'une quelconque des revendications précédentes.
